# FASCICULE DE BREVET EUROPEEN

(11) **EP 2 047 697 B1**
(45) Date de publication et mention de la délivrance du brevet: **10.10.2012**
(21) Numéro de dépôt: 07788064.9
(22) Date de dépôt: 31.07.2007
(51) Int. Cl.: H04W 8/18

(54) **PERSONNALISATION D'UN TERMINAL DE RADIOCOMMUNICATION COMPRENANT UNE CARTE SIM**
ANPASSUNG EINES FUNKKOMMUNIKATIONSENDGERÄTS MIT SIM-KARTE
CUSTOMIZING A RADIO COMMUNICATION TERMINAL COMPRISING A SIM CARD

(30) Priorité: 01.08.2006 FR 0607042
(43) Date de publication de la demande: 15.04.2009
(73) Titulaire: Wavecom, 92442 Issy-les-Moulineaux Cedex (FR)
(72) Inventeur: MONTES, Jacques, 94170 Le Perreux Sur Marne (FR)
(74) Mandataire: Guéné, Patrick
(86) Numéro de dépôt international: PCT/EP2007/057868
(87) Numéro de publication internationale: WO 2008/015206

(56) Documents cités:
- WO-A-01/76309
- WO-A-03/039176
- WO-A-03/077585
- US-A1- 2003 120 920

## Description

### 1. Domaine de l'invention

Le domaine de l'invention est celui des radiocommunications et plus particulièrement des dispositifs de radiocommunication, tels que les radiotéléphones, les PDA (« Personal Digital Assistant » en anglais), les terminaux de radiocommunication, destinés à être embarqués par exemple dans des machines ou des véhicules.

Plus précisément, l'invention concerne une technique de « gestion d'identité » permettant de personnaliser des dispositifs de radiocommunication.

L'invention s'applique notamment, mais non exclusivement, aux dispositifs de radiocommunication comprenant une carte SIM (pour « Subscriber Identity Module » en anglais, « module d'identité d'abonné » en français).

L'invention trouve notamment des applications dans le domaine du M2M (pour « machine to machine » en anglais), où les machines comprennent des terminaux de radiocommunication afin de communiquer entre elles et/ou avec un ou plusieurs équipements (typiquement un serveur).

### 2. Art antérieur

Par souci de simplification de la description, on se limitera, dans toute la suite de ce document, à décrire le cas particulier où le dispositif de radiocommunication est un terminal de radiocommunication GSM comprenant une carte SIM. L'Homme du Métier étendra sans difficulté cet enseignement à tout autre type de terminal de radiocommunication.

Classiquement, un terminal de radiocommunication GSM ne peut accéder aux services du réseau GSM sans carte SIM personnalisée (c'est-à-dire sans une carte SIM avec des données de personnalisation activées). « ».

En effet, une carte SIM est un module comprenant toutes les données concernant l'abonné, à savoir un numéro d'identité IMSI (pour « International Mobile Subscriber Identity » en anglais), une clé d'authentification Ki, ainsi que des algorithmes associés d'authentification de l'abonné par le réseau GSM.

« Le document de brevet WO 03/077585 décrit un terminal qui, après sortie d'usine, comprend des données initiales de personnalisation (« initial IMSI code »), lui permettant de transmettre, par SMS, une requête de personnalisation vers un serveur OTA.

Le document de brevet WO 01/76309 décrit un terminal qui, après sortie d'usine, comprend des premières données de personnalisation permettant d'établir une première liaison de radiocommunication avec un premier réseau de radiocommunication.

Le document de brevet US 2003/0120920 décrit un terminal de radiocommunication capable de communiquer avec un réseau de radiocommunication GSM via une première liaison de type GSM (nécessitant des données de personnalisation pour être établie) et avec un ordinateur via une seconde liaison de type Bluetooth. »

Lors de la personnalisation de terminaux de radiocommunication, on cherche notamment à concilier au moins certains des objectifs suivants :
- simplicité des manipulations d'activation de la personnalisation, l'utilisateur devant pouvoir effectuer ces opérations avec un nombre réduit d'opérations, et chacune de ces opérations devant être le plus facile possible ;
- sécurité des données de personnalisation ;
- simplicité et faible coût de la mise en oeuvre.

### 2.1 Personnalisation dans le cadre d'une application M2M

On discute ci-après les inconvénients de l'art antérieur à travers le cas particulier où l'on souhaite personnaliser un terminal de radiocommunication GSM embarqué dans un appareil de relevé de données à distance, par exemple un compteur d'eau.

La technique de personnalisation actuelle consiste, pour un utilisateur, à choisir un opérateur d'un réseau public terrestre (ou « PLMN » pour « Public Land Mobile Network » en anglais), acheter une carte SIM personnalisée dans un des points de vente de l'opérateur choisi, puis insérer la carte SIM personnalisée dans un terminal de radiocommunication. De cette manière, le terminal de radiocommunication est personnalisé et peut accéder aux services du réseau (PLMN) de l'opérateur choisi.

Les inventeurs ont constaté que la technique actuelle précitée présente un certain nombre d'inconvénients dans certaines situations, notamment dans le contexte d'une application en mode point à point du type M2M.

L'efficacité de cette technique connue est limitée par le fait que le terminal de radiocommunication, après personnalisation, n'utilise pas toujours les meilleures ressources radio (aussi appelées par la suite porteuses ou encore fréquences-balises) qui sont disponibles à l'endroit où il se trouve.

En effet, l'utilisateur choisit un opérateur sans connaître exactement la qualité du réseau (PLMN) de cet opérateur à l'endroit où le terminal sera utilisé par la suite.

Dans le pire des cas, le terminal de radiocommunication, qui a déjà été personnalisé par un utilisateur pour travailler avec un opérateur donné, peut même être placé dans une cellule géographique non couverte par cet opérateur donné.

Un autre inconvénient de cette technique connue réside dans le fait qu'elle ne permet pas à une société qui souhaiterait implanter des millions de terminaux (par exemple embarqués dans des compteurs d'eau) d'optimiser le choix de l'opérateur (c'est-à-dire du réseau) pour chaque terminal.

### 2.2 Personnalisation dans le cadre d'une gestion de cartes SIM jumelles

On discute maintenant les inconvénients de l'art antérieur à travers le cas particulier d'une gestion de cartes SIM jumelles.

Par cartes SIM jumelles, on entend dans la présente description des cartes SIM ayant chacune des données de personnalisation distinctes (numéro IMSI, clé Ki), mais qui sont gérées de façon commune par l'opérateur du réseau de radiocommunication. Par exemple, les cartes SIM jumelles fonctionnent avec le même numéro de téléphone MSISDN (pour « Mobile Station ISD Number » en anglais) et le même abonnement.

Actuellement, de plus en plus d'usagers possèdent plusieurs terminaux de radiocommunication.

Pour garantir une accessibilité optimale, les opérateurs de téléphonie mobile proposent aux usagers un jeu de deux cartes SIM, appelées cartes SIM jumelles.

Chacune des deux cartes SIM jumelles est destinée à être insérée dans un terminal distinct.

Ainsi, l'usager peut par exemple bénéficier d'un seul numéro d'appel, d'une messagerie vocale unique et d'une seule formule d'abonnement pour ses deux terminaux. De façon classique, les appels arrivent en priorité sur l'un des deux terminaux et sont transférés sur l'autre terminal en cas de non-réponse. La correspondance entre le numéro appelé et l'une ou l'autre des cartes SIM (c'est-à-dire entre l'une ou l'autre des IMSI associés à ces cartes SIM) est effectuée au niveau du réseau, notamment par le serveur de localisation HLR (pour « Home Location Register » en anglais).

A titre d'exemple, on suppose que l'utilisateur a déjà inséré une première carte SIM jumelle dans son propre terminal de radiocommunication et souhaite utiliser un terminal de radiocommunication embarqué dans une voiture de location. Avec la technique actuelle précitée, il doit donc pour cela insérer une seconde carte SIM jumelle dans le terminal de la voiture de location.

Les inventeurs ont constaté que la technique actuelle présente un certain nombre d'inconvénients dans certaines situations, notamment dans le contexte précité (contexte cartes SIM jumelles).

En effet, l'ergonomie de cette technique connue est limitée par le fait que l'usager, qui souhaite rapidement activer et utiliser le terminal de la voiture de location, doit tout d'abord retrouver la seconde carte SIM jumelle (se trouvant dans sa poche, son portefeuille, sa mallette,...), accéder au terminal de la voiture (par exemple dans le coffre), ôter un cache de protection de ce terminal pour accéder à un logement de réception de carte SIM, introduire la seconde carte SIM jumelle dans le logement prévu à cet effet puis remettre le cache.

Dans certains cas, certaines personnes rendent leur voiture de location sans récupérer leur seconde carte SIM jumelle, soit par oubli, soit par manque de temps.

Parfois, les utilisateurs non familiers à la téléphonie mobile ne savent pas à quel endroit ou dans quel sens insérer la seconde carte SIM jumelle, toujours est-il qu'ils peuvent l'endommager ou abîmer le terminal de la voiture de location.

De plus, la plupart des constructeurs automobiles souhaitent dorénavant que les moyens de radiocommunication soient complètement intégrés (par exemple dans le tableau de bord du véhicule), tant pour des raisons esthétiques qu'ergonomiques, ou encore de sécurité contre le vol. L'accès au logement de réception de carte SIM devient ainsi problématique.

Il existe donc un besoin d'optimisation de la mise en oeuvre par un utilisateur de deux cartes SIM jumelles dans deux terminaux de radiocommunication distincts, notamment dans le cas où l'utilisateur souhaite utiliser successivement au moins l'une de ces deux cartes SIM jumelles avec différents terminaux (par exemple des terminaux embarqués dans différentes voitures de location).

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique de personnalisation d'un terminal de radiocommunication qui soit efficace et simple à mettre en oeuvre.

Un autre objectif de l'invention, dans au moins un de ses modes de réalisation, est de fournir une telle technique, qui soit ergonomique et supprime, ou tout le moins limite, les opérations de saisie manuelle devant être effectuées par l'utilisateur.

Un autre objectif de l'invention, dans au moins un de ses modes de réalisation, est de proposer une telle technique qui soit notamment bien adaptée à la personnalisation sur le terrain d'un grand nombre de terminaux de radiocommunication mis en oeuvre dans des applications en mode point à point du type M2M.

Un autre objectif de l'invention, dans au moins un de ses modes de réalisation, est de proposer une telle technique qui soit notamment bien adaptée à la gestion de cartes SIM jumelles.

Un autre objectif de l'invention, dans au moins un de ses modes de réalisation, est de proposer une telle technique qui permette une meilleure mobilité de l'utilisateur.

L'invention, dans au moins un de ses modes de réalisation, a encore pour objectif de fournir une telle technique qui permette à un utilisateur d'autoriser ou non la personnalisation d'un terminal de radiocommunication.

L'invention, dans au moins un de ses modes de réalisation, a également pour objectif de fournir une telle technique qui soit peu coûteuse et compatible avec tous les terminaux de communication existants.

L'invention, dans au moins un de ses modes de réalisation, a en outre pour objectif de fournir une telle technique qui permette à un utilisateur de désactiver aisément la personnalisation d'un terminal de radiocommunication.

### 4. Exposé de l'invention

Ces objectifs, ainsi que d'autres qui apparaîtront par la suite, sont atteints à l'aide d'un procédé de personnalisation d'un premier terminal de radiocommunication possédant un mode de fonctionnement nécessitant des premières données de personnalisation afin de permettre une première liaison de radiocommunication avec un réseau de radiocommunication.

Selon l'invention, le procédé comprend les étapes suivantes
- utilisation après sortie d'usine dudit premier terminal, ne comprenant aucune donnée de personnalisation liée audit réseau de radiocommunication ;
- transmission desdites premières données de personnalisation depuis un dispositif de personnalisation vers ledit premier terminal de radiocommunication, via une seconde liaison distincte de ladite première liaison et indépendante dudit réseau de radiocommunication.

Ainsi, l'invention repose sur une approche tout à fait nouvelle et inventive de la personnalisation d'un terminal de radiocommunication en attente d'attribution d'une identité. En effet, cette personnalisation s'effectue de façon automatique, à partir de données de personnalisation transmises par un dispositif de personnalisation, via une liaison qui ne nécessite aucune données de personnalisation, du côté terminal de radiocommunication, pour être établie. L'utilisateur est donc libéré de cette tâche fastidieuse. Il est à noter que si l'utilisateur peut être impliqué dans la personnalisation du terminal de radiocommunication (par exemple pour avoisiner le terminal de radiocommunication et le dispositif de personnalisation), ce n'est pas obligatoire et en tout état de cause beaucoup moins contraignant que d'avoir à manipuler des moyens de stockage classiques de données de personnalisation, tels que les cartes SIM (cas de la technique actuelle).

Par condition d'utilisation réelle, on entend tout contexte d'utilisation après sortie d'usine.

Selon un aspect avantageux de l'invention, le dispositif de personnalisation est compris dans un second terminal de radiocommunication utilisant des secondes données de personnalisation. Selon l'invention, le procédé comprend une étape d'obtention par le second terminal de radiocommunication desdites premières données de personnalisation.

Dans un premier mode de réalisation particulier de l'invention, ladite étape d'obtention desdites premières données de personnalisation comprend une étape de lecture desdites premières données de personnalisation dans un moyen de stockage compris dans le dispositif de personnalisation.

Dans un second mode de réalisation particulier de l'invention, ladite étape d'obtention desdites premières données de personnalisation comprend les étapes suivantes :
- le dispositif de personnalisation envoie une requête d'allocation de données de personnalisation à un serveur distant ;
- le serveur envoie au dispositif de personnalisation une réponse contenant lesdites premières données de personnalisation.

Ce second mode de réalisation de l'invention couvre un premier cas dans lequel le serveur identifie l'utilisateur grâce à un algorithme d'identification/authentification mise en oeuvre par le réseau de communication, par exemple, du type GSM.

Il couvre également un second cas dans lequel le serveur identifie l'utilisateur grâce à un identifiant saisi par l'utilisateur, par exemple, via l'interface homme/machine du dispositif de personnalisation et transmis au serveur via la requête d'allocation.

L'invention propose avantageusement de générer de façon dynamique des données de personnalisation. Ainsi, un opérateur réseau peut optimiser, par exemple, le nombre d'IMSIs actifs sur son réseau.

De façon avantageuse, le procédé comprend en outre une étape d'obtention par le dispositif de personnalisation d'un identifiant dudit premier terminal. Selon l'invention, ladite requête d'allocation de données de personnalisation comprend ledit identifiant dudit premier terminal. En outre, le serveur crypte ladite réponse, avant de l'envoyer au dispositif de personnalisation, avec une clé de cryptage associée audit premier terminal, ladite clé étant connue dudit serveur et dudit premier terminal. Avantageusement, ledit dispositif de personnalisation transmet la réponse cryptée vers ledit premier terminal, via ladite seconde liaison.

L'invention propose de maximiser la sécurisation des données de personnalisation échangées, en mettant en oeuvre un cryptage de données unique entre le serveur et chaque terminal de radiocommunication en attente d'attribution d'une identité.

Dans un mode de réalisation préférentiel de l'invention, ladite étape d'obtention par le dispositif de personnalisation d'un identifiant dudit premier terminal comprend au moins une action appartenant au groupe comprenant :
- saisie dudit identifiant par un utilisateur via une interface homme/machine dudit dispositif de personnalisation ;
- lancement par l'utilisateur, via une interface homme/machine dudit premier terminal, d'une étape d'envoi dudit identifiant depuis le premier terminal vers ledit dispositif de personnalisation, via ladite seconde liaison ;
- détection de la présence dudit dispositif de personnalisation au voisinage dudit premier terminal, ou inversement, de sorte qu'en cas de détection positive ledit premier terminal transmet, directement ou en réponse à une requête d'identification préalablement envoyée par le dispositif, ledit identifiant vers ledit dispositif de personnalisation, via ladite seconde liaison.

Selon un aspect avantageux de l'invention, ledit second terminal de radiocommunication appartient à un utilisateur, lesdites secondes données de personnalisation étant associées audit utilisateur. Selon l'invention, lesdites premières données de personnalisation sont également associées audit utilisateur.

Ainsi, il est possible d'obtenir des cartes SIM jumelles. En effet, l'invention permet de personnaliser un terminal de radiocommunication avec des données de personnalisation associées à un utilisateur. L'invention propose d'envoyer ces données de personnalisation depuis un terminal de radiocommunication (déjà identifié) appartenant à l'utilisateur. Dans ce cas, l'utilisateur est identifié à partir de son propre terminal de radiocommunication.

De façon préférentielle, le procédé comprend une étape d'identification d'un utilisateur par le dispositif de personnalisation.

Ainsi, on prévoit avantageusement d'identifer un utilisateur, non plus à partir d'un terminal de radiocommunication lui appartenant, mais à partir d'informations qui lui sont propres et qui sont connues par le dispositif de personnalisation, par exemple, un mot de passe, une empreinte digitale, une expression vocale, etc.

Selon un autre aspect avantageux de l'invention, ledit second terminal de radiocommunication appartient à une première entité distincte d'une seconde entité à laquelle appartient ledit premier terminal, lesdites secondes données de personnalisation étant associées à ladite seconde entité. Selon l'invention, lesdites premières données de personnalisation sont associées à ladite première entité.

Avantageusement, ledit premier terminal comprend une carte SIM. Selon l'invention, le procédé comprend une étape de stockage desdites premières données de personnalisation dans ladite carte SIM.

On note que la carte SIM permet en outre de stocker la clé de cryptage définie en revendication 6.

Préférentiellement, lesdites données de personnalisation comprennent au moins un desdits éléments suivants :
- un numéro d'identité IMSI ;
- une clé d'authentification Ki ; et
- un algorithme d'authentification.

De façon avantageuse, le procédé comprend en outre une étape de fourniture audit premier terminal et/ou audit dispositif de personnalisation, par ledit utilisateur, d'une autorisation de la personnalisation dudit premier terminal avec lesdites premières données de personnalisation reçues via la seconde liaison.

De façon préférentielle, le procédé comprend une phase de désactivation de la personnalisation dudit premier terminal.

Avantageusement, ladite phase de désactivation comprend les étapes suivantes :
- envoi d'une requête de désactivation depuis le premier terminal vers ledit dispositif de personnalisation, via ladite seconde liaison ;
- fourniture audit premier terminal et/ou audit dispositif de personnalisation, par ledit utilisateur, d'une autorisation de la désactivation de la personnalisation dudit premier terminal.

L'invention concerne également un dispositif de personnalisation d'un premier terminal de radiocommunication possédant un mode de fonctionnement nécessitant des premières données de personnalisation afin de permettre une première liaison de radiocommunication avec un réseau de radiocommunication. Selon l'invention, le dispositif comprend :
- des moyens d'obtention desdites premières données de personnalisation ;
- des moyens de transmission desdites premières données de personnalisation vers ledit premier terminal de radiocommunication, via une seconde liaison distincte de ladite première liaison et indépendante dudit réseau de radiocommunication.

L'invention concerne aussi un premier terminal de radiocommunication comprenant des moyens de mise en oeuvre d'un mode de fonctionnement nécessitant des premières données de personnalisation afin de permettre une première liaison de radiocommunication avec un réseau de radiocommunication. Selon l'invention, le premier terminal comprend :
- des moyens d'obtention desdites premières données de personnalisation ;
- des moyens d'activation desdites premières données de personnalisation obtenues par lesdits moyens d'obtention.

L'invention concerne encore une carte SIM d'un premier terminal de radiocommunication possédant un mode de fonctionnement nécessitant des premières données de personnalisation afin de permettre une première liaison de radiocommunication avec un réseau de radiocommunication. Selon l'invention, la carte SIM comprend des moyens de stockage desdites premières données de personnalisation.

L'invention concerne en outre un serveur de personnalisation d'un premier terminal de radiocommunication possédant un mode de fonctionnement nécessitant des premières données de personnalisation afin de permettre une première liaison de radiocommunication avec un réseau de radiocommunication. Selon l'invention, le serveur comprend :
- des moyens d'obtention d'une requête d'allocation de données de personnalisation transmise par ledit dispositif de personnalisation ;
- des moyens de transmission au dispositif de personnalisation d'une réponse contenant lesdites premières données de personnalisation.

L'invention concerne également un produit programme d'ordinateur comprenant des instructions de code de programme pour l'exécution des étapes du procédé précité, lorsque ledit programme est exécuté sur un ordinateur.

L'invention concerne en outre un moyen de stockage, éventuellement totalement ou partiellement amovible, lisible par un ordinateur, stockant un jeu d'instructions exécutables par ledit ordinateur pour mettre en oeuvre le procédé précité.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un mode de réalisation particulier de l'invention, dans le cas d'une personnalisation d'un terminal de radiocommunication embarqué dans une voiture de location ;
- la figure 2 illustre un mode de réalisation particulier de l'invention, dans le cas d'une personnalisation de N terminaux de radiocommunication embarqués dans des compteurs d'eau ; et
- la figure 3 présente la structure simplifiée d'un mode de réalisation particulier d'un dispositif de personnalisation selon l'invention.

### 6. Description d'un mode de réalisation de l'invention

Par souci de clarté, dans toutes les figures du présent document les moyens sont référencés par des références numériques (du type 1, 2, 3,...) et les étapes de procédé sont référencées par des références alphanumériques (du type E1, E2, E3,...).

L'invention vise donc à fournir une technique de personnalisation d'un terminal de radiocommunication en attente d'attribution d'une identité.

### 6.1 Personnalisation selon l'invention dans le cadre d'une gestion de cartes SIM jumelles

Dans la suite de la description, on suppose à titre d'exemple que le dispositif de personnalisation selon l'invention est compris dans un premier terminal de radiocommunication (par exemple un premier radiotéléphone GSM) appartenant à un utilisateur, et transmet les données de personnalisation à un second terminal de radiocommunication (par exemple un second radiotéléphone GSM) embarqué dans une voiture de location, via une liaison radio.

Par souci de simplification de la description, on se limitera, dans toute la suite de ce document, à décrire le cas particulier d'une liaison de type BlueTooth entre le premier terminal (de l'utilisateur) et le second terminal (de la voiture). Bien entendu, tout autre type de liaison (filaire ou sans fil) peut être envisagé (ZigBee, RTC, etc.).

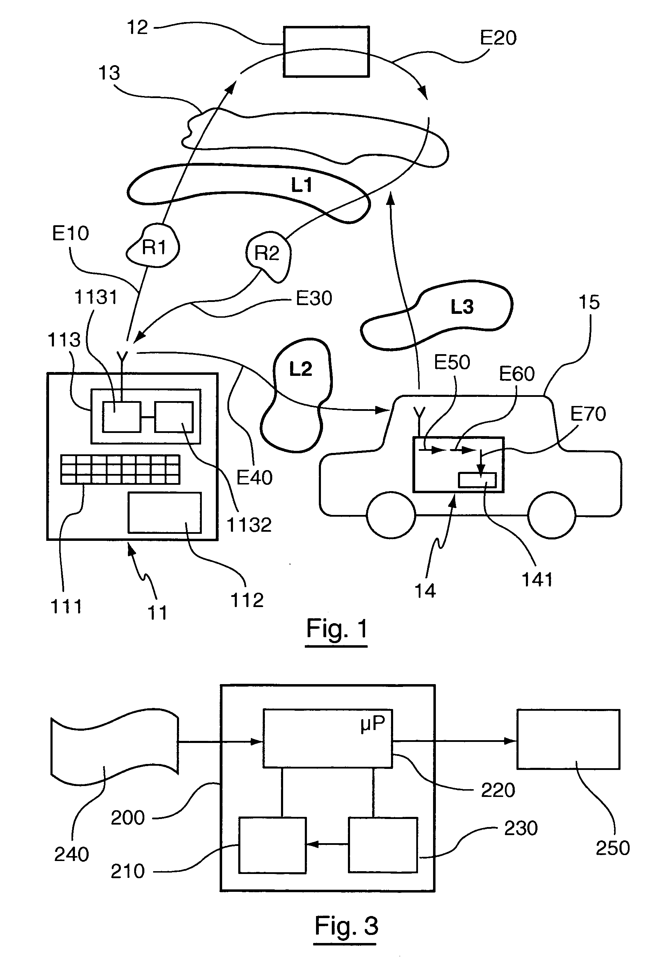

Dans le mode de réalisation particulier décrit par la suite en relation avec la **figure 1**, le procédé de personnalisation selon l'invention fait notamment intervenir un serveur distant accessible par le premier terminal via le réseau de communication GSM et générant de façon dynamique les données de personnalisation à transmettre vers le second terminal.

Il est important de noter que l'invention couvre également le cas où le premier terminal (de l'utilisateur) transmet directement des données de personnalisation (par exemple stockées dans des moyens de stockage compris dans le premier terminal) vers le second terminal (de la voiture) (via par exemple une liaison BlueTooth).

Un premier terminal GSM 11 de type classique en soi, comprenant notamment une interface homme/machine 111, par exemple un clavier alphanumérique, permettant la saisie par un utilisateur d'une demande d'allocation de données de personnalisation à un serveur distant 12, et une carte SIM 112 comprenant des données relatives à l'utilisateur. Ce premier terminal GSM 11 communique avec le serveur distant 12, via un réseau de communication GSM 13.

Selon l'invention, ce premier terminal GSM 11 est équipé d'un dispositif de personnalisation 113, comprenant lui-même des moyens d'obtention 1131 de données de personnalisation et des moyens de transmission 1132 de données de personnalisation.

Dans le présent mode de réalisation, un second terminal GSM 14 comprenant une «carte SIM vierge » 141 (c'est-à-dire une carte SIM sans données de personnalisation) est embarqué dans une voiture de location 15. Il est important de noter que le second terminal 14 est placé en condition d'utilisation réelle (c'est-à-dire dans un contexte d'utilisation hors usine), sans pour autant pouvoir communiquer avec le réseau 13. En effet, avant la personnalisation, le second terminal 14 ne possède pas les données de personnalisation nécessaires pour s'identifier auprès du réseau 13, à savoir un numéro d'identité IMSI, une clé d'authentification Ki et un algorithme d'authentification (qui peut être spécifique à chaque opérateur).

On décrit maintenant, en référence à la figure 1, un mode de réalisation particulier du procédé selon l'invention, qui permet à un utilisateur de personnaliser la carte SIM d'un second terminal GSM 14 embarqué dans une voiture de location 15, au moyen d'un premier terminal GSM lui appartenant.

Comme déjà indiqué, dans le mode de réalisation illustré, le dispositif de personnalisation 113 selon l'invention est compris dans le premier terminal GSM 11 de l'utilisateur. Par ailleurs, on suppose que le second terminal 14 de la voiture est identifié par un identifiant unique. Cet identifiant unique est par exemple un code alphanumérique, apposé de manière apparente sur le tableau de bord du véhicule.

Lors d'une première étape E10, l'utilisateur saisit, via l'interface homme/machine 111 du premier terminal GSM 11, l'identifiant du second terminal 14, et lance l'envoi d'une demande d'allocation d'identité vers le serveur distant 12, via une première liaison GSM L1. Cette demande d'allocation se traduit par l'envoi d'une requête d'allocation R1 de données de personnalisation au serveur. Il est important de noter que la requête d'allocation contient l'identifiant du terminal de radiocommunication 14.

Dans une variante de réalisation, l'obtention de l'identifiant du second terminal est conditionnée par l'action sur une interface homme/machine disposée sur ou au voisinage du tableau de bord du véhicule.

Dans une autre variante de réalisation, l'obtention de l'identifiant du second terminal est conditionnée par la détection de la présence du dispositif de personnalisation 113 (embarqué dans le radiotéléphone) au voisinage du second terminal 14.

Lors d'une étape E20, le serveur 12 identifie l'utilisateur grâce à un algorithme d'identification/authentification classique mis en oeuvre par le réseau GSM. On note que le réseau GSM connaît l'identité de l'utilisateur, puisque ce dernier est connecté au réseau, au moyen d'un premier terminal dans lequel est insérée une carte SIM personnalisée.

Lors d'une étape E30, le serveur 12 envoie au premier terminal GSM 11 une réponse R2 contenant des données de personnalisation associées à l'utilisateur. On note que les données de personnalisation sont générées ou sélectionnées par le serveur de façon dynamique. En d'autres termes, le serveur génère ou sélectionne, pour chaque requête d'allocation, un nouvel IMSI et l'associe au numéro MSISDN de l'utilisateur identifié à l'étape E20. Dans ce mode de réalisation particulier, le serveur crypte la réponse, avant de l'envoyer au premier terminal GSM 11, avec une clé de cryptage associée à l'identifiant de la carte SIM du second terminal 14. En d'autres termes, la réponse cryptée est uniquement lisible par le second terminal 14. Comme illustré, la réponse cryptée est envoyée au premier terminal GSM 11, via la première liaison GSM L1.

Lors d'une étape E40, le premier terminal GSM 11 transmet les données de personnalisation obtenues à l'étape E30 vers le second terminal 14 de la voiture, via une liaison BlueTooth L2.

Ensuite, lors d'une étape E50, un ou plusieurs messages d'information de personnalisation sont restitués à l'utilisateur via une interface homme/machine (non représentée) disposée sur ou au voisinage du tableau de bord du véhicule (par exemple sous la forme d'un texte via un écran LCD, d'un message sonore via un haut parleur, etc.).

Puis, lors d'une étape E60, on distingue les réponses de l'utilisateur au(x) message(s) d'information précédemment restitué(s) (étape E50), de sorte que :
- si l'utilisateur répond négativement à ce(s) message(s) d'information, on retourne à l'étape E10, c'est-à-dire que l'utilisateur ne souhaite pas continuer la personnalisation ;
- en revanche, si l'utilisateur répond positivement à ce(s) message(s) d'information, on passe à une étape E70, c'est-à-dire que l'utilisateur souhaite continuer la personnalisation.

Enfin, lors de l'étape E70, on stocke les données de personnalisation associées à l'utilisateur dans la carte SIM vierge du second terminal 14. A cet instant, le second terminal 14 est enregistré sur le réseau de communication GSM 13 avec l'identité de l'utilisateur, et peut dès lors être utilisé par l'utilisateur pour recevoir/transmettre des appels téléphoniques, via une seconde liaison GSM L3.

Il est important de noter que la carte SIM vierge devient, après enregistrement des données de personnalisation associées à l'utilisateur, une carte SIM jumelle (au sens général précité) de celle insérée dans le premier terminal.

On note par ailleurs que les données de personnalisation (associées à l'utilisateur) enregistrées sur la carte SIM jumelle (c'est-à-dire celle insérée dans le second terminal) sont des données de personnalisation activées de façon provisoire. En effet, en fin d'utilisation du second terminal (par exemple lorsque l'utilisateur rend la voiture de location) les données de personnalisation associées à l'utilisateur sont désactivées (c'est-à-dire effacées de la carte SIM).

Dans un mode de réalisation préférentiel, on prévoit les requêtes d'acquittement suivantes :
- une première requête d'acquittement envoyée au premier terminal GSM 11 par le second terminal 14, via la liaison BlueTooth ;
- une deuxième requête d'acquittement envoyée au serveur distant 12 par le premier terminal GSM 11, via la première liaison GSM ;
- une troisième requête d'acquittement envoyée au serveur distant 12 par le second terminal 14, via la seconde liaison GSM.

### 6.2 Personnalisation selon l'invention dans le cadre d'une application M2M

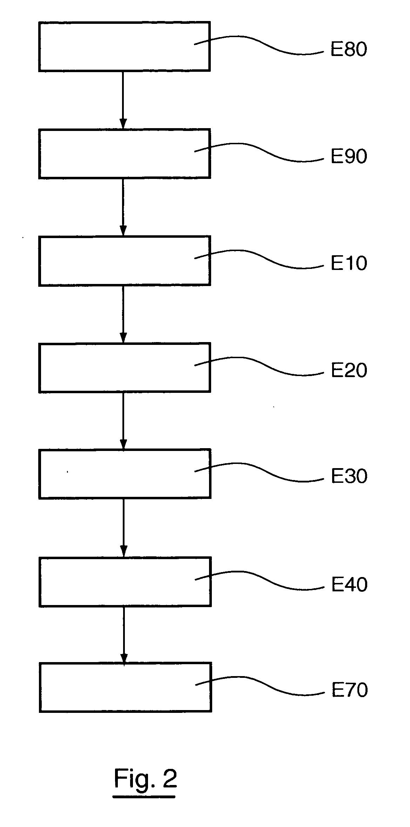

On décrit ci-après, en référence à la **figure 2**, un mode de réalisation particulier du procédé selon l'invention, qui permet à un installateur d'une société de gestion d'appareils de relevé de données de personnaliser N cartes SIM, appartenant chacune à un second terminal GSM embarqué, par exemple, dans un compteur d'eau, au moyen d'un premier terminal GSM (par exemple un PDA). Dans le présent mode de réalisation, le dispositif de personnalisation selon l'invention est compris dans le premier terminal GSM, et chaque second terminal GSM comprend une carte SIM vierge.

Comme on le notera certaines étapes de la figure 2 sont identiques (mêmes références alphanumériques) à certaines étapes décrites précédemment à la figure 1. Par souci de clarté, ces étapes communes ne sont pas décrites de nouveau ci-après.

Dans le présent mode de réalisation, l'installateur personnalise les N cartes SIM des seconds terminaux, l'une après l'autre. En d'autres termes, on met en oeuvre les étapes décrites ci-après, pour chaque second terminal.

Lors d'une première étape E80, l'installateur obtient au moyen du premier terminal GSM, des informations de porteuses (par exemple des informations de puissance/qualité, des informations de réseaux (PLMN),...) pour les opérateurs visibles à l'endroit où se trouve le second terminal.

Lors d'une étape E90, l'installateur choisit, par exemple, l'opérateur qui présente la meilleure qualité de réseau.

Les étapes E10, E20, E30, E40 et E70 (déjà décrites en référence à la figure 1) sont relatives à des phases de demande (par le premier terminal GSM), d'obtention et de stockage dans la carte SIM vierge du second terminal de données de personnalisation spécifiques à l'opérateur choisi à l'étape E90.

On note que dans ce mode de réalisation, il peut y avoir ou non un lien (vu côté opérateur) entre les cartes SIM après leur personnalisation. En d'autres termes, les N cartes SIM des seconds terminaux peuvent être des cartes SIM jumelles, en revanche, la carte SIM du premier terminal ne fait pas partie de l'ensemble des cartes SIM gérées de façon commune par l'opérateur du réseau de radiocommunication.

### 6.3 Dispositif de personnalisation

La **figure 3** présente de façon schématique la structure d'un dispositif de personnalisation 200 selon l'invention, qui comprend une mémoire 210, et une unité de traitement 220 équipée d'un microprocesseur µP, qui est piloté par un programme d'ordinateur (ou application) 230 mettant en oeuvre le procédé selon l'invention. L'unité de traitement 220 reçoit en entrée une demande d'allocation de données de personnalisation 240. Le microprocesseur µP traite cette demande, selon les instructions du programme 230, pour obtenir des données de personnalisation 250 associées à un utilisateur.

## Revendications

1. Procédé de personnalisation d'un premier terminal de radiocommunication (14) comprenant une carte SIM (141) dans laquelle peuvent être enregistrées des premières données de personnalisation permettant d'établir une première liaison (L3) de radiocommunication entre ledit premier terminal de radiocommunication et un réseau de radiocommunication (13),
**caractérisé en ce que**, après sortie d'usine, ladite carte SIM est dépourvue de toute donnée de personnalisation liée à un réseau de radiocommunication, de sorte que le premier terminal ne peut communiquer avec aucun réseau de radiocommunication,
et **en ce que**, préalablement à l'établissement de ladite première liaison de radiocommunication, ledit procédé comprend une étape de transmission (E40) desdites premières données de personnalisation depuis un dispositif de personnalisation (11) vers ledit premier terminal (14) de radiocommunication, via une seconde liaison (L2) établie entre ledit premier terminal de radiocommunication et le dispositif de personnalisation et qui ne nécessite aucune donnée de personnalisation dans ladite carte SIM pour être établie, et qui n'est pas une liaison de radiocommunication avec ledit réseau.

2. Procédé selon la revendication 1, **caractérisé en ce que** le dispositif de personnalisation est compris dans un second terminal de radiocommunication (11) utilisant des secondes données de personnalisation, et **en ce que** ledit procédé comprend une étape d'obtention (E30) par le second terminal de radiocommunication desdites premières données de personnalisation.

3. Procédé selon la revendication 2, **caractérisé en ce que** ladite étape d'obtention desdites premières données de personnalisation comprend une étape de lecture desdites premières données de personnalisation dans un moyen de stockage compris dans le dispositif de personnalisation.

4. Procédé selon la revendication 2, **caractérisé en ce que** ladite étape d'obtention desdites premières données de personnalisation comprend les étapes suivantes :
- le dispositif de personnalisation envoie (E10) une requête d'allocation de données de personnalisation à un serveur distant (12) ;
- le serveur envoie (E30) au dispositif de personnalisation une réponse contenant lesdites premières données de personnalisation.

5. Procédé selon la revendication 4, **caractérisé en ce qu'**il comprend en outre une étape d'obtention par le dispositif de personnalisation d'un identifiant dudit premier terminal,
**en ce que** ladite requête d'allocation de données de personnalisation comprend ledit identifiant dudit premier terminal,
**en ce que** le serveur crypte ladite réponse, avant de l'envoyer au dispositif de personnalisation, avec une clé de cryptage associée audit premier terminal, ladite clé étant connue dudit serveur et dudit premier terminal,
et **en ce que** ledit dispositif de personnalisation transmet la réponse cryptée vers ledit premier terminal, via ladite seconde liaison.

6. Procédé selon la revendication 5, **caractérisé en ce que** ladite étape d'obtention par le dispositif de personnalisation d'un identifiant dudit premier terminal comprend au moins une action appartenant au groupe comprenant :
- saisie dudit identifiant par un utilisateur via une interface homme/machine dudit dispositif de personnalisation ;
- lancement par l'utilisateur, via une interface homme/machine dudit premier terminal, d'une étape d'envoi dudit identifiant depuis le premier terminal vers ledit dispositif de personnalisation, via ladite seconde liaison ;
- détection de la présence dudit dispositif de personnalisation au voisinage dudit premier terminal, ou inversement, de sorte qu'en cas de détection positive ledit premier terminal transmet, directement ou en réponse à une requête d'identification préalablement envoyée par le dispositif, ledit identifiant vers ledit dispositif de personnalisation, via ladite seconde liaison.

7. Procédé selon l'une quelconque des revendications 2 à 6, **caractérisé en ce que** ledit second terminal de radiocommunication appartient à un utilisateur, lesdites secondes données de personnalisation étant associées audit utilisateur, et **en ce que** lesdites premières données de personnalisation sont également associées audit utilisateur.

8. Procédé selon la revendication 7, **caractérisé en ce qu'**il comprend une étape d'identification (E20) d'un utilisateur par le dispositif de personnalisation.

9. Procédé selon l'une quelconque des revendications 2 à 6, **caractérisé en ce que** ledit second terminal de radiocommunication appartient à une première entité distincte d'une seconde entité à laquelle appartient ledit premier terminal, lesdites secondes données de personnalisation étant associées à ladite seconde entité, **en ce que** lesdites premières données de personnalisation sont associées à ladite première entité.

10. Procédé selon l'une quelconque des revendications 1 à 9, **caractérisé en ce que** lesdites données de personnalisation comprennent au moins un desdits éléments suivants :
- un numéro d'identité IMSI ;
- une clé d'authentification Ki ; et
- un algorithme d'authentification.

11. Procédé selon l'une quelconque des revendications 1 à 10, **caractérisé en ce qu'**il comprend en outre une étape de fourniture (E60) audit premier terminal et/ou audit dispositif de personnalisation, par ledit utilisateur, d'une autorisation de la personnalisation dudit premier terminal avec lesdites premières données de personnalisation reçues via la seconde liaison.

12. Procédé selon l'une quelconque des revendications 1 à 11, **caractérisé en ce qu'**il comprend une phase de désactivation de la personnalisation dudit premier terminal.

13. Procédé selon la revendication 12, **caractérisé en ce que** ladite phase de désactivation comprend les étapes suivantes :
- envoi d'une requête de désactivation depuis le premier terminal vers ledit dispositif de personnalisation, via ladite seconde liaison ;
- fourniture audit premier terminal et/ou audit dispositif de personnalisation, par ledit utilisateur, d'une autorisation de la désactivation de la personnalisation dudit premier terminal.

14. Premier terminal de radiocommunication comprenant une carte SIM dans laquelle peuvent être enregistrées des premières données de personnalisation permettant d'établir une première liaison de radiocommunication entre ledit premier terminal de radiocommunication et un réseau de radiocommunication, **caractérisé en ce que**, après sortie d'usine, ladite carte SIM est dépourvue de toute donnée de personnalisation liée à un réseau de radiocommunication, de sorte que ledit premier terminal ne peut communiquer avec aucun réseau de radiocommunication,
et **en ce qu'**il comprend :
- des moyens de réception desdites premières données de personnalisation transmises par un dispositif de personnalisation, via une seconde liaison établie entre ledit premier terminal de radiocommunication et le dispositif de personnalisation et qui ne nécessite aucune donnée de personnalisation dans ladite carte SIM pour être établie, et qui n'est pas une liaison de radiocommunication avec ledit réseau.

15. Produit programme d'ordinateur (230) téléchargeable depuis un réseau de communication et/ou enregistré sur un support lisible par ordinateur et/ou exécutable par un processeur **caractérisé en ce qu'**il comprend des instructions de code de programme pour l'exécution des étapes du procédé de personnalisation d'au moins une des revendications 1 à 13, lorsque ledit programme est exécuté sur un ordinateur.

16. Moyen de stockage (210), éventuellement totalement ou partiellement amovible, lisible par un ordinateur, stockant un jeu d'instructions exécutables par ledit ordinateur pour mettre en oeuvre le procédé de personnalisation selon l'une quelconque des revendications 1 à 13.

17. Système de personnalisation comprenant un premier terminal de radiocommunication (14) et un réseau de radiocommunication (13), ledit premier terminal de radiocommunication comprenant une carte SIM (141) dans laquelle peuvent être enregistrées des premières données de personnalisation permettant d'établir une première liaison (L3) de radiocommunication entre ledit premier terminal de radiocommunication et ledit réseau de radiocommunication, **caractérisé en ce que**, après sortie d'usine, ladite carte SIM est dépourvue de toute donnée de personnalisation liée à un réseau de radiocommunication, de sorte que le premier terminal ne peut communiquer avec aucun réseau de radiocommunication,
et **en ce que** ledit système de personnalisation comprend un dispositif de personnalisation (11) apte à effectuer, préalablement à l'établissement de ladite première liaison de radiocommunication, une étape de transmission (E40) desdites premières données de personnalisation vers ledit premier terminal (14) de radiocommunication, via une seconde liaison (L2) établie entre ledit premier terminal de radiocommunication et le dispositif de personnalisation et qui ne nécessite aucune donnée de personnalisation dans ladite carte SIM pour être établie, et qui n'est pas une liaison de radiocommunication avec ledit réseau.

## Claims

1. A method for personalising a first radiocommunication terminal (14) comprising a SIM card (141) on which may be recorded first personalisation data allowing a first radiocommunication connection (L3) to be established between the first radiocommunication terminal and a radiocommunication network (13),
**characterised in that**, once out of the factory, the SIM card does not have any personalisation data connected to a radiocommunication network, so that the first terminal cannot communicate with any radiocommunication network,
and **in that**, prior to establishing the first radiocommunication connection, the method comprises a step of transmitting (E40) the first personalisation data from a personalisation device (11) to the first radiocommunication terminal (14), via a second connection (L2) which is established between the first radiocommunication terminal and the personalisation device and which does not require any personalisation data on the SIM card in order to be established, and which is not a radiocommunication connection with respect to the network.

2. A method according to claim 1, **characterised in that** the personalisation device is included in a second radiocommunication terminal (11) using second personalisation data, and **in that** the method comprises a step of obtaining (E30) the first personalisation data via the second radiocommunication terminal.

3. A method according to claim 2, **characterised in that** the step of obtaining the first personalisation data comprises a step of reading the first personalisation data from a storage means included in the personalisation device.

4. A method according to claim 2, **characterised in that** the step of obtaining the first personalisation data comprises the following steps:
- the personalisation device sends (E10) a request for allocation of personalisation data to a remote server (12);
- the server sends (E30) to the personalisation device a response containing the first personalisation data.

5. A method according to claim 4, **characterised in that** it further comprises a step of obtaining an identifier of the first terminal via the personalisation device,
**in that** the request for allocation of personalisation data comprises the identifier of the first terminal,
**in that** the server encrypts the response, before sending it to the personalisation device, with an encryption key associated with the first terminal, the key being known to the server and the first terminal,
and **in that** the personalisation device transmits the encrypted response to the first terminal, via the second connection.

6. A method according to claim 5, **characterised in that** the step of obtaining an identifier of the first terminal via the personalisation device comprises at least one action which belongs to the group comprising:
- input of the identifier by a user via a man/machine interface of the personalisation device;
- initiation, by the user, via a man/machine interface of the first terminal, of a step of sending the identifier from the first terminal to the personalisation device, via the second connection;
- detection of the presence of the personalisation device in the region of the first terminal, or vice versa, so that in the case of positive detection the first terminal transmits, directly or in response to an identification request previously sent by the device, the identifier to the personalisation device, via the second connection.

7. A method according to any one of claims 2 to 6, **characterised in that** the second radiocommunication terminal belongs to a user, the second personalisation data being associated with the user, and **in that** the first personalisation data are also associated with the user.

8. A method according to claim 7, **characterised in that** it comprises a step of identification (E20) of a user by the personalisation device.

9. A method according to any one of claims 2 to 6, **characterised in that** the second radiocommunication terminal belongs to a first entity which is separate from a second entity to which the first terminal belongs, the second personalisation data being associated with the second entity, **in that** the first personalisation data are associated with the first entity.

10. A method according to any one of claims 1 to 9, **characterised in that** the personalisation data comprise at least one of the following elements:
- an identity number IMSI;
- an authentication key Ki; and
- an authentication algorithm.

11. A method according to any one of claims 1 to 10, **characterised in that** it further comprises a step of supplying (E60) to the first terminal and/or to the personalisation device, via the user, an authorisation of the personalisation of the first terminal with the first personalisation data received via the second connection.

12. A method according to any one of claims 1 to 11, **characterised in that** it comprises a step of deactivation of the personalisation of the first terminal.

13. A method according to claim 12, **characterised in that** the deactivation step comprises the following steps:
- sending a deactivation request from the first terminal to the personalisation device, via the second connection;
- supplying to the first terminal and/or to the personalisation device, via the user, an authorisation for the deactivation of the personalisation of the first terminal.

14. A first radiocommunication terminal comprising a SIM card on which may be recorded first personalisation data allowing a first radiocommunication connection to be established between the first radiocommunication terminal and a radiocommunication network,
**characterised in that**, once out of the factory, the SIM card does not have any personalisation data connected to a radiocommunication network, so that the first terminal cannot communicate with any radiocommunication network,
and **in that** it comprises:
- means for receiving the first personalisation data transmitted by a personalisation device, via a second connection which is established between the first radiocommunication terminal and the personalisation device and which does not require any personalisation data on the SIM card in order to be established, and which is not a radiocommunication connection with respect to the network.

15. A computer program product (230) downloadable from a communication network and/or recorded on a computer-readable medium and/or performable by a processor, **characterised in that** it comprises program code instructions for carrying out the steps of the personalisation method of at least one of claims 1 to 13, when the program is carried out on a computer.

16. A storage means (210), which is optionally completely or partially removable, readable by a computer and which stores a set of instructions that can be carried out by the computer in order to implement the personalisation method according to any one of claims 1 to 13.

17. A personalisation system comprising a first radiocommunication terminal (14) and a radiocommunication network (13), the first radiocommunication terminal comprising a SIM card (141) on which may be recorded first personalisation data allowing a first radiocommunication connection (L3) to be established between the first radiocommunication terminal and the radiocommunication network,
**characterised in that**,
once out of the factory, the SIM card does not have any personalisation data connected to a radiocommunication network, so that the first terminal cannot communicate with any radiocommunication network,
and **in that** the personalisation system comprises a personalisation device (11) which is capable of carrying out, prior to establishing the first radiocommunication network, a step of transmitting (E40) the first personalisation data to the first radiocommunication terminal (14), via a second connection (L2) which is established between the first radiocommunication terminal and the personalisation device and which does not require any personalisation data on the SIM card in order to be established, and which is not a radiocommunication connection with respect to the network.

## Patentansprüche

1. Verfahren zur Personalisierung eines ersten Funkkommunikationsendgeräts (14), umfassend eine SIM Karte (141), auf welcher erste Personalisierungsdaten gespeichert werden können, die das Herstellen einer ersten Funkkommunikationsverbindung (L3) zwischen dem ersten Funkkommunikationsendgerät und einem Funkkommunikationsnetz (13) ermöglichen, **dadurch gekennzeichnet, dass** nach dem Verlassen des Werks die SIM Karte frei von allen Personalisierungsdaten bezogen auf ein Funkkommunikationsnetz ist, s o dass das erste Endgerät mit keinem Funkkommunikationsnetz kommunizieren kann, und dadurch, dass das Verfahren vor der Herstellung der ersten Funkkommunikationsverbindung einen Schritt des Übertragens (E40) der ersten Personalisierungsdaten von einer Personalisierungseinrichtung (11) zu dem ersten Funkkommunikationsendgerät über eine zweite Verbindung (L2), die zwischen dem ersten Funkkommunikationsendgerät und der Personalisierungseinrichtung hergestellt ist und keine Personalisierungsdaten auf der SIM Karte zur Herstellung benötigt, und keine Funkkommunikationsverbindung mit dem Netz ist, umfasst.

2. Verfahren nach Anspruch 1, **dadurch gekennzeichnet, dass** die Personalisierungseinrichtung in einem zweite Personalisierungsdaten verwendenden zweiten Funkkommunikationsendgerät (11) enthalten ist, und dadurch, dass das Verfahren einen Schritt des Erhaltens (30) der ersten Personalisierungsdaten durch das zweite Funkkommunikationsendgerät umfasst.

3. Verfahren nach Anspruch 2, **dadurch gekennzeichnet, dass** der Schritt des Erhaltens der ersten Personalisierungsdaten einen Schritt des Lesens der ersten Personalisierungsdaten in einem Speichermittel, enthalten in der Personalisierungseinrichtung, umfasst.

4. Verfahren nach Anspruch 2, **dadurch gekennzeichnet, dass** der Schritt des Erhaltens der ersten Personalisierungsdaten die folgenden Schritte umfasst:
- die Personalisierungseinrichtung sendet (E10) eine Personalisierungsdatenzuweisungsanfrage an einen entfernten Server (12);
- der Server sendet (E30) an die Personalisierungseinrichtung eine Antwort, enthaltend die ersten Personalisierungsdaten.

5. Verfahren nach Anspruch 4, **dadurch gekennzeichnet, dass** es des Weiteren einen Schritt des Erhaltens einer Identifikation des ersten Endgeräts durch die Personalisierungseinrichtung umfasst,
dadurch, dass die Personalisierungsdatenzuweisungsanfrage die Identifikation des ersten Endgeräts umfasst,
dadurch, dass der Server die Antwort vor dem Senden an die Personalisierungseinrichtung mit einem dem ersten Endgerät zugeordneten Verschlüsselungsschlüssel verschlüsselt, wobei der Schlüssel dem Server und dem Endgerät bekannt ist,
und dadurch, dass die Personalisierungseinrichtung die Antwort verschlüsselt an das erste Endgerät über die zweite Verbindung übermittelt.

6. Verfahren nach Anspruch 5, **dadurch gekennzeichnet, dass** der Schritt des Erhaltens einer Identifikation des ersten Endgeräts durch die Personalisierungseinrichtung wenigstens eine Handlung umfasst, gehörig zu der Gruppe umfassend:
- Erfassen der Identifikation durch einen Benutzer über eine Mensch-Maschine-Schnittstelle der Personalisierungseinrichtung;
- Starten eines Schritts des Sendens der Identifikation, über eine Mensch-Maschine-Schnittstelle des ersten Endgeräts, von dem ersten Endgerät zu der Personalisierungseinrichtung über die zweite Verbindung durch den Benutzer;
- Feststellen des Vorhandenseins der Personalisierungseinrichtung in Nachbarschaft des ersten Endgeräts, oder umgekehrt, derart dass im Falle des positiven Feststellens das erste Endgerät, direkt oder als Antwort auf eine zuvor durch die Einrichtung gesendete Identifizierungsanfrage, die Identifikation in Richtung der Personalisierungseinrichtung über die zweite Verbindung überträgt.

7. Verfahren nach einem der Ansprüche 2 bis 6, **dadurch gekennzeichnet, dass** das zweite Funkkommunikationsendgerät zu einem Benutzer gehört, wobei die zweiten Personalisierungsdaten dem Benutzer zugeordnet sind, und dadurch, dass die ersten Personalisierungsdaten ebenfalls dem Benutzer zugeordnet sind.

8. Verfahren nach Anspruch 7, **dadurch gekennzeichnet, dass** es einen Identifizierungsschritt (E20) eines Benutzers durch die Personalisierungseinrichtung umfasst.

9. Verfahren nach einem der Ansprüche 2 bis 6, **dadurch gekennzeichnet, dass** das zweite Funkkommunikationsendgerät zu einer ersten Einheit gehört, die von einer zweiten Einheit, zu der das erste Endgerät gehört, verschieden ist, wobei die zweiten Personalisierungsdaten der zweiten Einheit zugeordnet sind,
und dadurch, dass die ersten Personalisierungsdaten der ersten Einheit zugeordnet sind.

10. Verfahren nach einem der Ansprüche 1 bis 9, **dadurch gekennzeichnet, dass** die Personalisierungsdaten wenigstens eines der folgenden Elemente umfassen:
- eine IMSI Identitätsnummer;
- ein Ki Authentifizierungsschlüssel; und
- ein Authentifizierungsalgorithmus.

11. Verfahren nach einem der Ansprüche 1 bis 10, **dadurch gekennzeichnet, dass** es weiterhin einen Schritt des Bereitstellens (E60) für das erste Endgerät und/oder für die Personalisierungseinrichtung durch den Benutzer einer Autorisation der Personalisierung des ersten Endgeräts mit den ersten Personalisierungsdaten, die über die zweite Verbindung empfangen wurden, umfasst.

12. Verfahren nach einem der Ansprüche 1 bis 11, **dadurch gekennzeichnet, dass** es eine Phase der Deaktivierung der Personalisierung des ersten Endgeräts umfasst.

13. Verfahren nach Anspruch 12, **dadurch gekennzeichnet, dass** die Phase der Deaktivierung die folgenden Schritte umfasst:
- Senden einer Deaktivierungsanfrage von dem ersten Endgerät an die Personalisierungseinrichtung über die zweite Verbindung;
- Bereitstellen einer Autorisation der Deaktivierung der Personalisierung des ersten Endgeräts für das erste Endgerät und/oder für die Personalisierungseinrichtung durch den Benutzer.

14. Erstes Funkkommunikationsendgerät umfassend eine SIM Karte auf welcher erste Personalisierungsdaten gespeichert werden können, die das Herstellen einer ersten Funkkommunikationsverbindung zwischen dem ersten Funkkommunikationsendgerät und einem Funkkommunikationsnetz ermöglichen,
**dadurch gekennzeichnet, dass**, nach dem Verlassen des Werks, die SIM Karte frei von allen Personalisierungsdaten bezogen auf ein Funkkommunikationsnetz ist, so dass das erste Endgerät mit keinem Funkkommunikationsnetz kommunizieren kann,
und dadurch, dass es umfasst:
- Mittel zum Empfang der durch eine Personalisierungseinrichtung übertragenen ersten Personalisierungsdaten über eine zweite Verbindung, die zwischen dem ersten Funkkommunikationsendgerät und der Personalisierungseinrichtung hergestellt ist und die keine Personalisierungsdaten auf der SIM Karte benötigt um hergestellt zu werden, und die keine Funkkommunikationsverbindung mit dem Netz ist.

15. Computerprogrammprodukt (230), von einem Kommunikationsnetz herunterladbar und/oder gespeichert auf einem computerlesbaren Träger und/oder ausführbar durch einen Prozessor,
**dadurch gekennzeichnet, dass** es die Programmcodeinstruktionen zur Ausführung der Schritte des Verfahrens zur Personalisierung nach wenigstens einem der Ansprüche 1 bis 13 umfasst, wenn das Programm auf einem Computer ausgeführt wird.

16. Speichermittel (210), möglicherweise vollständig oder teilweise entfernbar, computerlesbar, einen Befehlssatz von durch den Computer ausführbaren Instruktionen speichernd, um das Verfahren zur Personalisierung nach einem der Ansprüche 1 bis 13 zu implementieren.

17. Personalisierungssystem, umfassend ein erstes Funkkommunikationsendgerät (14) und ein Funkkommunikationsnetz (13), wobei das erste Funkkommunikationsendgerät eine SIM Karte (141) umfasst, auf der erste Personalisierungsdaten gespeichert werden können, die das Herstellen einer ersten Funkkommunikationsverbindung (L3) zwischen dem ersten Funkkommunikationsendgerät und dem Funkkommunikationsnetz ermöglichen,
**dadurch gekennzeichnet, dass**, nach dem Verlassen des Werks, die SIM Karte frei von allen Personalisierungsdaten bezogen auf ein Funkkommunikationsnetz ist, so dass das erste Endgerät mit keinem Funkkommunikationsnetz kommunizieren kann,
und dadurch, dass das Personalisierungssystem eine Personalisierungseinrichtung (11) umfasst, die dazu angepasst ist, vor der Herstellung der ersten Funkkommunikationsverbindung, einen Übertragungsschritt (E40) der ersten Personalisierungsdaten an das erste Funkkommunikationsendgerät (14) über eine zweite Verbindung (L2) auszuführen, die zwischen dem ersten Funkkommunikationsendgerät und der Personalisierungseinrichtung hergestellt ist und die zur Herstellung keine Personalisierungsdaten auf der SIM Karte benötigt, und die keine Funkkommunikationsverbindung mit dem Netz ist.
